# EUROPÄISCHE PATENTSCHRIFT

(11) **EP 0 863 490 B1**
(45) Veröffentlichungstag und Bekanntmachung des Hinweises auf die Patenterteilung: **03.01.2007**
(21) Anmeldenummer: 98101993.8
(22) Anmeldetag: 05.02.1998
(51) Int. Cl.: G07C 5/00

(54) **Vorrichtung und Verfahren zur Berechnung und Anzeige von Service-Intervallen**
Device and method for calculating and displaying service intervals
Dispositif et procédé pour calculer et afficher des intervalles de service

(30) Priorität: 07.03.1997 DE 19709445
(43) Veröffentlichungstag der Anmeldung: 09.09.1998
(73) Patentinhaber: Volkswagen Aktiengesellschaft, 38436 Wolfsburg (DE)
(72) Erfinder: Meyerdierks, Dietrich, 38102 Braunschweig (DE); Pickert, Detlef, 38448 Wolfsburg (DE); Heinrich, Hartmut, Dr., 38108 Braunschweig (DE); Sölter, Harald, Dr., 38118 Braunschweig (DE)

(56) Entgegenhaltungen:
- EP-A- 0 489 261
- EP-A- 0 602 707
- EP-A- 0 661 673
- DE-A- 3 110 774
- US-A- 4 796 204

## Beschreibung

Die Erfindung betrifft eine Vorrichtung und ein Verfahren zur Ermittlung und Anzeige von Service-Intervallen, insbesondere für Kraftfahrzeuge.

Eine Vielzahl bekannter Vorrichtungen, wie z.B. Werkzeugmaschinen oder Kraftfahrzeuge, müssen in bestimmten Intervallen gewartet werden, um die Zuverlässigkeit zu gewährleisten und die Lebensdauer der Vorrichtung zu erhöhen. Der Einfachheit halber geben viele Hersteller feste Wartungsintervalle vor, die einzuhalten sind, um vom Hersteller übernommene Garantien aufrechtzuerhalten. Bei Kraftfahrzeugen wurden daher vom Hersteller bestimmte Kilometerangaben gemacht, nach deren Zurücklegung das Kraftfahrzeug zur Inspektion mußte. Dies führte dazu, daß der Kraftfahrzeuginhaber oftmals ohne technische Notwendigkeit sein Kraftfahrzeug überprüfen lassen mußte, was für diesen einen erheblichen Kostenfaktor darstellt. Der Grund für die Ungenauigkeit der Zeitangabe für eine notwendige Inspektion ist, daß z.B. die Lebensdauer der Motorölflüssigkeit von vielen Betriebsparametern abhängig ist. Da diese aber vorab nicht bestimmbar, sondern von Umgebungsfaktoren und der Fahrweise des Halters abhängig sind, mußten entsprechende Sicherheitsmargen eingebaut werden. Bereits früh wurden daher Anstrengungen unternommen, die Service-Intervalle genauer zu bestimmen und den tatsächlichen Gegebenheiten besser anzupassen.

So kann z.B. der Verschmutzungsgrad des Motoröls in Abhängigkeit vom elektrischen Widerstand, dem Differenzdruck zwischen Auf- und Abstromseite des Ölfilters, der Lichtdurchlässigkeit oder der chemischen Zusammensetzung des Motoröls direkt bestimmt werden. Nachteilig an diesen direkten Meßmethoden ist der sehr aufwendige zusätzliche Aufbau, so daß man von diesen direkten Meßmethoden Abstand genommen und versucht hat, aus den bereits anderweitig bekannten Betriebsparametern auf den Verschmutzungsgrad des Motoröls zurückzuschließen.

Aus der DE 31 17 951 ist ein Service-Intervall-Anzeigesystem für Kraftfahrzeuge bekannt, bei dem in Abhängigkeit von einem bestimmten Durchschnittsverbrauch für eine bestimmte Fahrstrecke eine Kraftstoffgesamtmenge festgelegt wird und die tatsächlich verbrauchte Kraftstoffmenge von Beginn jedes Service-Intervalls an fortlaufend addiert wird und bei Erreichen einer festgelegten Kraftstoffmenge ein Signal ausgelöst wird.

Aus der DE 31 14 689 ist eine Service-Intervall-Anzeigevorrichtung für Kraftmaschinen mit einer Ausgangswelle bekannt, bei der für die Gesamtdrehzahl der Ausgangswelle ein Grenzwert eingegeben wird, bei dessen Überschreiten ein Signal zur Vornahme des Services erzeugt wird. Nachteilig an den bekannten Vorrichtungen ist, daß jeweils nur ein Parameter gegen einen anderen Parameter statisch ausgetauscht wird, so daß unterschiedliche Abhängigkeiten der einzelnen Betriebsparameter auf einen notwendigen Servicezeitpunkt nicht berücksichtigt werden. So kann z.B. auch ein langer Betriebsstillstand einer Vorrichtung eine Wartung erforderlich machen.

Aus der DE 31 34 121 ist eine Einrichtung zur Anzeige des Wartungszeitpunktes eines Kraftfahrzeuges bekannt, bei der zwei getrennte Impulsfolgen erzeugt werden und diese disjunktiv verknüpft werden. Dabei ist eine Impulsfolge abhängig von einem motorverschleißenden Parameter und die andere Impulsfolge eine reine Zeitgröße ist.

Aus der DE 31 39 798 ist eine Anzeigevorrichtung für Wartungsintervalle bei Brennkraftmaschinen, insbesondere für Kraftfahrzeuge, bekannt, bei der drehzahlabhängig Zählimpulse auf einen einstellbaren Frequenzteiler einer Zählvorrichtung gegeben werden, wobei die Einstellung des Teilungsverhältnisses durch ein temperaturabhängiges Signal erfolgt, so daß die Drehzahlimpulse mit der Temperatur gewichtet werden.

Aus der DE 32 28 195 ist eine Vorrichtung zur Überwachung des Zeitpunktes des Schmierölwechsels für einen Kraftfahrzeugmotor bekannt, bei der sensorisch die Motordrehzahl und -belastung erfaßt werden und aus den erfaßten Werten die im Motorschmieröl enthaltene Rußmenge berechnet wird. Der im Motorschmieröl enthaltene Ruß ist ein wichtiger Parameter für die Güte. Mit steigendem Ruß, der überwiegend aus unlöslichem Benzol besteht, nimmt die Viskosität zu und die Alkalinität ab. Die Alkalinität dient dazu, die durch Ionen im Motorbrennstoff hervorgerufene Azidität zu neutralisieren, so daß die auf der Azidität beruhende Zerstörung des Ölfilms verhindert werden kann. Daher hat die sinkende Alkalinität des Motorschmieröls einen verstärkten Abrieb zur Folge. Andererseits ist die Viskosität ein wesentlicher Faktor für die Bildung des Ölfilms. Eine geringe Viskosität führt dazu, daß der Ölfilm nicht aufrechterhalten werden kann, wohingegen eine zu hohe Viskosität zu einem verstärkten Abrieb führt, da das Schmieröl sich auf Grund des Druckverlustes im Schmierölsystem nicht gleichmäßig verteilen kann. Verfahrensmäßig empfängt ein Mikrocomputer die erfaßten Daten für die Motordrehzahl und die Motorlast, sowie Korrekturfaktoren von Öl- und Brennstoff-Wählschaltern. Mit Hilfe dieser Informationen und einer im Mikrocomputer-Speicher abgelegten empirisch ermittelten Funktion berechnet der Mikrocomputer den Rußeintrag in das Motoröl und gibt ein Alarmsignal bei Überschreitung eines Schwellwertes ab. Nachteilig an der bekannten Vorrichtung ist die Vernachlässigung wichtiger Einflußgrößen wie z.B. der Öltemperatur.

Aus der DE 44 01 835 ist eine Vorrichtung zur Ermittlung des Ölwechselzeitpunktes eines Kraftfahrzeuges bekannt, umfassend jeweils einen Sensor zur Erfassung der Motordrehzahl, der Motorlast, der Motoröltemperatur und der Fahrstrecke, einen Mikrocomputer zur Ermittlung des Ölwechselzeitpunktes sowie eine Anzeigevorrichtung, bei der der Mikrocomputer über eine Zentraleinheit, eine Arithmetikeinheit, einen Festwertspeicher, Eingabe- und Ausgabeeinheiten und nichtflüchtige Speicher verfügt. Dazu sind in einem nichtflüchtigen Speicher der für individuelle Motortypen zuvor ermittelte Rußeintragwert ins Motoröl in Abhängigkeit von der Motordrehzahl abgespeichert. In einem zweiten nichtflüchtigen Speicher ist die thermische Motorbelastung in Abhängigkeit von der Motordrehzahl und der Motoröltemperatur abgespeichert. In festgelegten Intervallen werden die aktuellen Werte für den Rußeintrag, die thermische Motorölbelastung und die zurückgelegte Fahrstrecke in nichtflüchtige Summationsspeicher eingelesen und auf die zuvor ermittelten Werte aufaddiert. Mittels einer mathematischen Gewichtungsfunktion in den Festwertspeicher berechnet die Arithmetikeinheit aus den Werten in den Summationsspeichern den aktuellen Belastungsgrad des Motoröls, der anschließend zur Anzeige gebracht werden kann. Nachteilig an allen bekannten Vorrichtungen ist die relativ große Ungenauigkeit bei der Ermittlung der Intervalle, da entweder verschleißbeeinflussende Parameter überhaupt nicht oder aber nur summarisch erfaßt werden.

Der Erfindung liegt daher das technische Problem zugrunde, eine Vorrichtung und ein Verfahren zur Ermittlung der Service-Intervalle bei Verschleiß und/oder Alterungsprozessen unterworfenen Komponenten und/oder Betriebsmedien zu schaffen, mittels derer die Service-Intervalle genauer bestimmbar sind.

Die Lösung des technischen Problems ergibt sich durch die Merkmale der Ansprüche 1 und 11. Dabei werden mittels Sensoren die für den Verschleiß und/oder die Alterungsprozesse wesentlichen Betriebsparameter erfaßt oder aus den erfaßten Betriebsparametern abgeleitet, wobei überwiegend auf bereits für den Betrieb notwendige Sensoren zurückgegriffen wird. Die erfaßten Betriebsparameter werden unterteilt in solche, die einen stetigen Zusammenhang mit dem Verschleiß und/oder der Alterung der Komponenten und/oder Betriebsmedien aufweisen, und solchen die einen diskreten Zusammenhang aufweisen. Ein Betriebsparameter mit stetigem Zusammenhang wird zur Ermittlung einer Basisgröße herangezogen, die ein Grundmaß für den Verschleiß und/oder die Alterung darstellt. Die in einem mehr oder weniger diskreten Zusammenhang stehenden Betriebsparameter werden in einer Quantisierungseinheit bewertend unterteilt, d.h. einem bestimmten Parameterbereich wird ein Bewertungsfaktor zugeordnet. Der Grad der Unterteilung ist abhängig von Art des Einflusses und dem Grad an Genauigkeit mit der das Service-Intervall bestimmt werden soll. Das Maß für die Bewertungsfaktoren kann für unterschiedliche Betriebsparameter dabei sehr unterschiedlich ausfallen, je nachdem wie stark der jeweilige Betriebsparameter den Verschleiß bzw. die Alterung beeinflußt. Die Basisgröße wird dann in einer Bewertungseinrichtung mit den Bewertungsfaktoren faktorisch verrechnet, wobei zur Reduzierung der zu verarbeitenden Datenmengen eine Mittelung der jeweiligen Bewertungsfaktoren über ein festgelegtes Zeitintervall möglich ist. Aus der mit den Bewertungsfaktoren verrechneten Basisgröße läßt sich somit die partiell hinzutretende Verschlechterung der Komponente und/oder des Betriebsmediums entnehmen. Diese partielle Verschlechterung wird auf die bereits in vorherigen Betriebszuständen erfaßte Belastungen mittels eines Integrators aufaddiert. Um nichtlineare Zusammenhänge zwischen der Funktionalität der Komponente und/oder dem Betriebsmedium und der erfaßten Belastung zu berücksichtigen kann wahlweise ein Gewichtung mit einer diesen Zusammenhang berücksichtigenden Bewertungsfunktion stattfinden. Die somit ermittelte Gesamtbelastung wird mit einem vorgegebenen Schwellwert verglichen, wobei bei Überschreitung des Schwellwertes ein Signal erzeugt wird, das den notwendigen Service anzeigt. Insbesondere durch die Unterteilung der Betriebsparameter in stetige bzw. kontinuierliche oder diskrete Einflußgrößen können alle relevanten Betriebsparameter berücksichtigt werden, ohne den schaltungstechnischen bzw. rechentechnischen Aufwand zu erhöhen.

Die Vorrichtung und das Verfahren sind für jede Art von Vorrichtungen anwendbar, in denen Komponenten und/oder Betriebsmedien wie Flüssigkeiten oder Gase durch erfaßbare Betriebsparameter verschlechtert werden. Insbesondere bei hochwertigen Vorrichtungen wie z.B. Produktionsanlagen oder Kraftfahrzeugen werden durch die genauere Ermittlung der Service-Intervalle Kosten eingespart und die Umweltbelastung reduziert, da Wartungen meist mit einem Maschinenstillstand verbunden sind. Der umwelttechnische Gesichtspunkt ergibt sich dadurch, daß die oft Sondermüll darstellenden Betriebsmedien wirklich nur dann ausgetauscht oder aufgefrischt werden, wenn dies notwendig ist.

Weitere vorteilhafte Ausgestaltungen der Erfindung ergeben sich aus den Unteransprüchen.

Insbesondere können bei komplexen System ein oder mehrere Bewertungseinrichtungen parallel vorgesehen werden, denen gleiche oder unterschiedliche Betriebsparameter direkt oder über eine Quantisierungseinheit zugeführt werden. Die bewerteten und mit Schnellwerten verglichenen Ausgangssignale werden entweder auf einer gemeinsamen oder auf unterschiedlichen Anzeigen dargestellt.

Die Erfindung wird nachfolgend anhand eines bevorzugten Ausführungsbeispiels näher erläutert. Die Fig. zeigen:
- Fig. 1:: ein Prinzipschaltbild einer Vorrichtung zur Ermittlung und Anzeige des Service-Intervalls für einen Motorölwechsel und
- Fig. 2:: eine funktionelle Darstellung der relativen Ölbelastung in Abhängigkeit von der Öltemperatur.

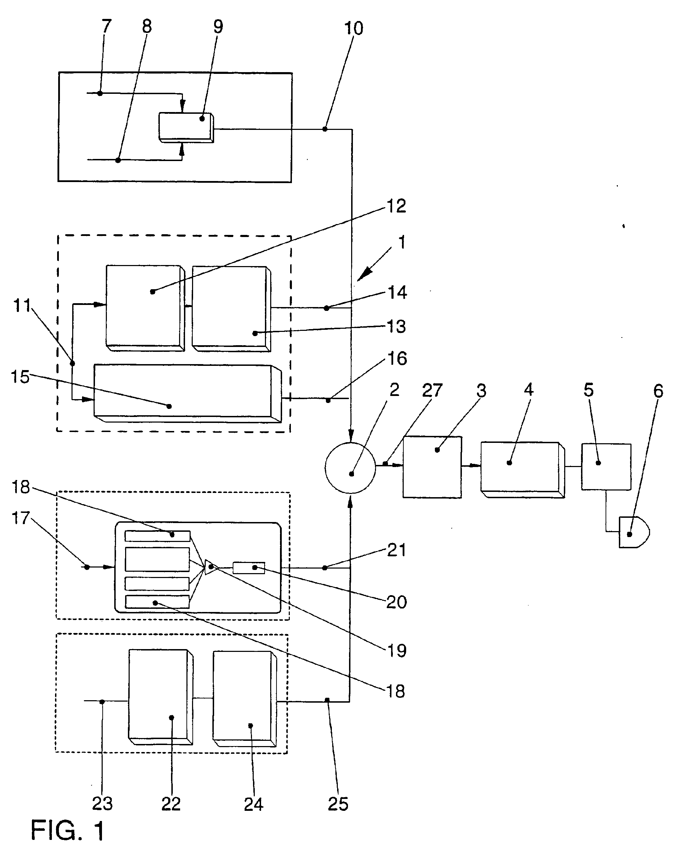

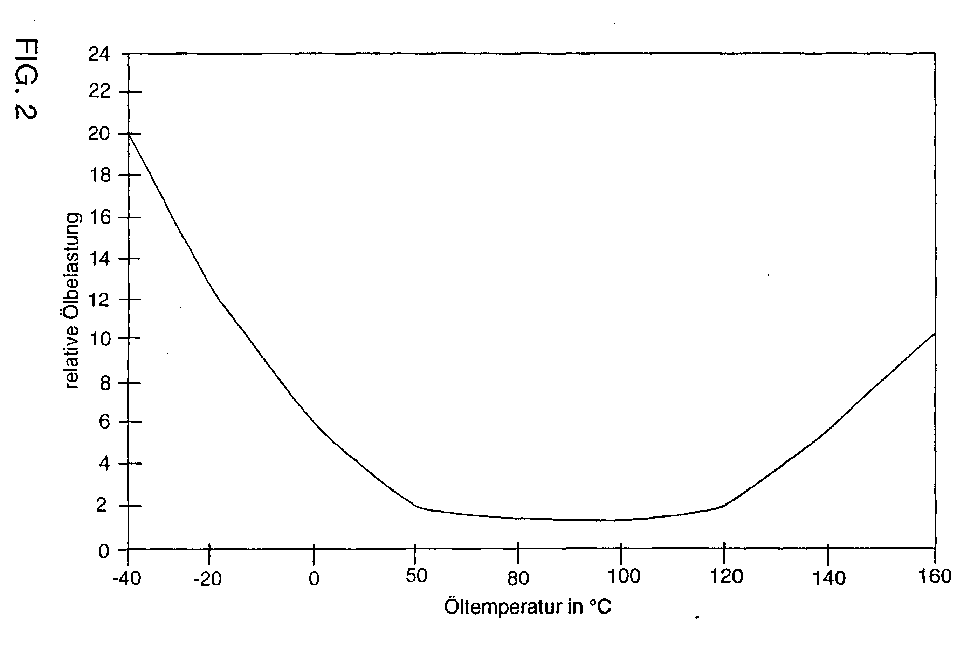

In Fig. 1 ist eine Vorrichtung 1 zur Ermittlung und Anzeige des Service-Intervalls für einen Motorölwechsel bei Kraftfahrzeugen dargestellt. Die Vorrichtung 1 umfaßt vier Module, die nachfolgend näher erläutert werden, eine Bewertungseinrichtung 2, einen Integrator 3, einen eine nichtlineare Bewertungsfunktion beinhaltende Speicher 4, einen Komparator 5 und ein Anzeigeelement 6. Zur Ermittlung der Motorbelastung als ein wesentlicher Betriebsparameter für die Ölbelastung werden die Motordrehzahl 7 und der Kraftstoffverbrauch 8 auf bekannte Weise erfaßt. Mittels eines empirisch ermittelten Kennlinienfeldes 9 kann daraus eine Basisgröße 10 für die Motorölbelastung abgeleitet und der Bewertungseinrichtung 2 zugeführt werden. In einem weiteren Modul wird der Einfluß der erfaßten Öltemperatur 11 ermittelt. Bei normalen Betriebsbedingungen hat die Öltemperatur 11 kaum Einfluß auf die Ölbelastung. Wie aus Fig. 2 ersichtlich, steigt die Ölbelastung jedoch mit höheren oder niedrigen Temperaturwerten stark an. Bei niedrigen Öltemperaturen 11 können sonst leicht flüchtige Schadstoffe im Motoröl kondensieren, was zu einer steigenden Ölbelastung führt. Bei höheren Öltemperaturen 11 kommt es dagegen zu einer thermischen Zersetzung des Öls. Zur Bewertung der Öltemperatur 11 wird diese einer Quantisierungseinheit 12 zugeführt, die im wesentlichen aus einer Fuzzy-Logik gebildet wird. Die Öltemperatur 11 wird in der Quantisierungseinheit 12 in Fuzzy-Mengen abgebildet. Dabei wird vorzugsweise der Bereich niedriger Öltemperatur 11 stärker unterteilt, da die Auswirkungen auf die Ölbelastung stark progressiv sind, wie aus Fig. 2 ersichtlich ist. Die Abbildung in Fuzzy-Mengen kann man sich so vorstellen, daß einem bestimmten Temperaturbereich ein Verschlechterungsfaktor zugeordnet wird. So kann z.B. dem Temperaturbereich von 50° bis 120 °C ein Faktor 1, dem Bereich von 120° bis 160 °C und -20° bis 50 °C ein Faktor 2, dem Bereich von - 20 bis - 30 °C ein Faktor 3 und den Bereich von -30 bis -40 °C ein Faktor 4 zugeordnet werden, wobei die Größe der Faktoren hier nur zur Erläuterung derart gewählt sind, wohingegen die ausgewählten Temperaturbereiche eine bevorzugte Unterteilung darstellen. Um die zu verarbeitenden Datenmengen zu reduzieren, werden die jeweils aktuell ermittelten Faktoren einer Bewertungseinheit 13 zugeführt, in der eine arithmetische Mittelung über ein festgesetztes Zeitintervall stattfindet. Nach Ablauf des vorgegebenen Zeitintervalls liegt am Ausgang der Bewertungseinheit 13 ein Bewertungsfaktor 14 an, der der Bewertungseinrichtung 2 zugeführt wird. In einer weiteren Bewertungseinheit 15 wird auf ähnliche Weise wie zuvor beschrieben ein Bewertungsfaktor 16 für die Betriebsverhältnisse ermittelt, wobei darunter im wesentlichen die Gesamt-Kilometerleistung des Fahrzeuges und die Zusammensetzung der Fahrstrecke verstanden wird. Der Übersicht halber wurde auf eine Darstellung der Zuführung der gefahrenen Kilometer verzichtet. Die Zusammensetzung der Fahrstrecke kann z.B. in folgende Fuzzy-Mengen abgebildet werden: längere Fahrstrecke mit hoher Öltemperatur 11 (z.B. schnelle Autobahnfahrt), längere Fahrstrecke mit mittlerer Öltemperatur 11 (z.B. Landstraße) und kurze Fahrstrecke bei niedriger Geschwindigkeit und mit häufigem Wiederstart bei niedriger Öltemperatur 11. Dazu werden die Fuzzy-Mengen für die Öltemperatur 11 noch einmal getrennt bewertet und integriert, solange eine niedrige Öltemperatur 11 vorliegt. Bei Auftreten einer erhöhten Öltemperatur 11 wird der Integrator der niedrigen Öltemperatur 11 gestoppt und ein Integrator für die erhöhte Öltemperatur 11 gestartet. Die Zeitdauer der erhöhten Öltemperatur 11 wird bewertet, wobei kurze und sehr lange Zeiträume unterdrückt werden. Berücksichtigt wird nur ein Zeitfenster von wenigen Minuten bis zu etwa einer Stunde. Innerhalb dieser Zeit wird der Bewertungsfaktor 16 gebildet, der beide Integratoren entsprechend der Werte und Wertigkeiten berücksichtigt. Die schaltungstechnische Erfassung der Zusammensetzung der Fahrstrecke kann dabei z.B. wie folgt erfolgen: Ein Zähler, Integrator oder ähnliches wird durch eine bestimmte Öltemperatur 11 bzw. Bereich der Öltemperatur 11 enabled und der Zähler beginnt entsprechend zu laufen. Für die Autobahnfahrt wäre eine sehr hohe Öltemperatur 11 das enablede Ereignis. Sinkt die Öltemperatur 11, so wird der Zähler disabled und durch entsprechende Signalzusammenfassung der anderen Öltemperaturbereiche, wie z.B. durch ein Oder-Gatter, kann ein Reset-Signal für den Zähler erzeugt werden.

Ein weiterer Faktor für die Ölbelastung ist das Fahrverhalten. Ein ökonomischer Fahrer nutzt den Grenzbereich der Motorbelastung selten aus, so daß kaum eine zusätzliche Ölbelastung auftritt. Ein sportlicher Fahrer hingegen nutzt häufig die volle Motorleistung aus, was über längere Zeit zu einer erhöhten Öltemperatur 11 führt. Ein nervöser Fahrer wechselt sehr häufig die Motorbelastung, was insbesondere im kalten Betriebszustand zu einer erhöhten Verdünnung des Öls durch in dieses gelangenden Treibstoff führt. Da die erhöhte Öltemperatur 11 bei sportlicher Fahrt bereits direkt durch die zuvor beschriebene Auswertung der Öltemperatur 11 berücksichtigt wird, muß hauptsächlich eine nervöse Fahrweise separat erfaßt werden. Dazu wird die Gaspe-dalaktivität 17 erfaßt und entsprechenden Fuzzy-Mengen 18 zugeordnet, mittels einer Interferenz-Maschine 19 zusammengefaßt und durch eine Bewertungseinrichtung 20 in einen Bewertungsfaktor 21 umgerechnet, der wie die zuvor ermittelten Bewertungsfaktoren 14, 16 der Bewertungseinrichtung 2 zugeführt wird.

Zusätzlich werden die äußeren klimatischen Bedingungen berücksichtigt. Das klimatische Umfeld beeinflußt zum einen das Grundniveau der Öltemperatur 11 und zum anderen die Belastung des Öls durch Anlagerung von Feuchtigkeit und Kraftstoff. Insbesondere sehr kaltes und tropisches Klima sind in dieser Hinsicht besonders ungünstig. Vorzugsweise wird daher das äußere Klima in vier Fuzzy-Mengen 22 unterteilt, nämlich kaltes, gemäßigtes, warmes und tropisches Klima. Dazu wird die Außentemperatur 23 und/oder die Luftfeuchtigkeit sensorisch erfaßt. In einer Bewertungseinrichtung 24 wird dann ein entsprechender Bewertungsfaktor 25 ermittelt und an die Bewertungseinrichtung 2 weitergegeben. Als weitere, hier nicht dargestellte Faktoren kommen z.B. noch der Ölstand und ein partielles Nachfüllen von Öl in Frage.

In der Bewertungseinrichtung 2 wird die Basisgröße 10 mit den Bewertungsfaktoren 14, 16, 21 und 25 multipliziert. Anschaulich können die Bewertungsfaktoren 14, 16, 21 und 25 als Bestrafungsfaktor aufgefaßt werden. Bei einer Fahrt auf einer Landstraße bei optimaler Öltemperatur 11 in einem Land mit gemäßigtem Klima und einem ruhigen Fahrer wären alle Bewertungsfaktoren 14, 16, 21 und 25 gleich eins, d.h. die Motorölbelastung beruht einzig und allein auf der Motorbelastung und die aktuell zusätzliche Motorölbelastung beruht auf der Basisgröße 10. Je nach dem wie stark sich ein Betriebsparameter von seinen Optimum entfernt und abhängig davon wie stark beeinflussend der jeweilige Betriebsparameter ist, wird die Basisgröße 10 multi-plikativ erhöht. Diese ermittelte partielle Motorölbelastung 27 wird mittels eines Integrators 3 auf die bereits existierende Motorölbelastung aufsummiert. Da der Viskositätsanstieg und das Absinken der Basenzahl im Motoröl nicht linear ist, sondem eine progressive Steigung aufweist, wird die Gesamtbelastung mit einer die progressive Steigung berücksichtigenden nichtlinearen Bewertungsfunktion gewichtet, die im Speicher 4 abgelegt ist. Die so ermittelte resultierende Belastung wird dem Komparator zugeführt und mit einem empirisch ermittelten Grenz- oder Sollwert verglichen. Bei Überschreitung des Grenzwertes wird dann ein Signal an das Anzeigeelement 6 abgegeben und dort dargestellt. Zusätzlich kann auch die vermutlich verbleibende Restzeit aus dem bisherigen Fahrtverlauf extrapoliert und angezeigt werden. Dies kann sowohl als Restzeit als auch als verbleibende Fahrstrecke ausgedrückt werden. Zusätzlich kann parallel zur beschriebenen Vorrichtung 1 ein Zähler angeordnet werden, der nach jedem Motorölwechsel neu gestartet wird und nach einer festen Zeit von z.B. 1-2 Jahren ein Signal für eine Service-Untersuchung abgeben.

Zur Ermittlung der Koeffizienten und Wichtungsfaktoren des Verfahrens werden im Fahrversuch zum einen die Einflußgrößen gemessen, zum anderen werden in bestimmten Abständen Ölproben genommen und analysiert. Damit sind für ausgewählte Fahrstrecken sowohl die zeitlichen Verläufe der Eingangsgrößen des Verfahrens als auch die Sollwerte für die Schätzung bekannt. Mit Hilfe eines Parameter-Identifizierungsverfahrens können die Koeffizienten und Faktoren so abgeglichen werden, daß der Schätzwert für die im Fahrversuch gefahrenen Strecken mit der tatsächlichen Ölbelastung nahezu übereinstimmt.

## Patentansprüche

1. Vorrichtung zur Berechnung und Anzeige von Service-Intervallen bei Verschleiß und/oder Alterungsprozessen unterworfenen Komponenten und/oder Betriebsmedien von Vorrichtungen, insbesondere bei Kraftfahrzeugen, umfassend Sensoren zur Erfassung der den Verschleiß und/oder die Alterung beeinflussender Betriebsparameter, mindestens eine Quantisierungseinheit (12, 15, 18, 22) zur bewertenden Quantisierung mindestens eines Betriebsparameters mit wahlweiser Mittelung über ein vorgegebenes Zeitintervall, dessen Ausgang mit einem Eingang einer Bewertungseinrichtung (2) verbunden ist, an deren weitere Eingänge die anderen erfassten Betriebsparameter direkt oder über weitere Quantisierungseinheiten (12, 15, 18, 22) geführt sind, einen Integrator (3), wahlweise einen eine nichtlineare Bewertungsfunktion beinhaltenden Speicher (4) und einen Komparator (5), wobei der Ausgang der Bewertungseinrichtung (2) mit einem Eingang des Integrators (3) verbunden ist, der die Ausgangsdaten der Bewertungseinrichtung (2) aufsummiert, dessen Ausgang wahlweise mit dem die nichtlineare Bewertungsfunktion beinhaltenden Speicher (4) oder direkt mit dem Komparator (5) verbunden ist, wobei die erfassten Betriebsparameter in solche unterteilt werden, die einen stetigen Zusammenhang mit dem Verschleiß und/oder Alterung der Komponenten und/oder Betriebsmedien aufweisen, und solchen, die einen diskreten Zusammenhang aufweisen, wobei mindestens ein Betriebsparameter mit stetigem Zusammenhang zur Ermittlung einer Basisgröße (10) herangezogen wird und der Bewertungseinrichtung (2) zugeführt wird, wobei mindestens ein Betriebsparameter mit diskretem Zusammenhang in einer Quantisierungseinheit (12, 15, 18. 22) bewertend unterteilt wird und ein Bewertungsfaktor zugeordnet wird, der dann ebenfalls der Bewertungseinrichtung (2) zugeführt wird.

2. Vorrichtung nach Anspruch 1, **dadurch gekennzeichnet, dass** das Ausgangssignal des Komparators (5) einer Anzeigeeinrichtung (6) zuführbar ist.

3. Vorrichtung nach Anspruch 1 oder 2, **dadurch gekennzeichnet, dass** mindestens eine weitere Bewertungseinrichtung (2) vorhanden ist, der Betriebsparameter direkt oder über eine Quantisierungseinheit (12, 15, 18, 22) zugeführt werden und der ein Integrator (3), wahlweise ein eine nichtlineare Bewertungsfunktion beinhaltender Speicher (4) und ein Komparator (5) nachgeschaltet ist.

4. Vorrichtung nach Anspruch 3, **dadurch gekennzeichnet, dass** das weitere Ausgangssignal des weiteren Komparators (5) der Anzeigeeinrichtung (6) und/oder einer weiteren Anzeigeeinrichtung zuführbar ist.

5. Vorrichtung nach einem der Ansprüche 1 bis 4, **dadurch gekennzeichnet, dass** die Quantisierungseinheit (12, 15, 18, 22) als Fuzzy-Logik ausgebildet ist.

6. Vorrichtung nach einem der Ansprüche 1 bis 5, **dadurch gekennzeichnet, dass** zur Ermittlung des Service-Intervalles für den Motorölwechsel bei Kraftfahrzeugmotoren die Sensoren den Kraftstoffverbrauch (8), die Motordrehzahl (7) und die Öltemperatur (11) erfassen.

7. Vorrichtung nach Anspruch 6, **dadurch gekennzeichnet, dass** die Sensoren die Gaspedalaktivität (17) und/oder die äußeren klimatischen Bedingungen erfassen.

8. Vorrichtung nach Anspruch 6 oder 7, **dadurch gekennzeichnet, dass** mittels eines Kennlinienfeldes (9) aus dem Kraftstoffverbrauch (8) und der Motordrehzahl (7) eine Basisgröße (10) für die Motorölbelastung ableitbar ist, die der Bewertungseinrichtung (2) zuführbar ist, wobei den weiteren erfassten ' Betriebsparametern bzw. von denen abgeleiteten Parametern Bewertungsfaktoren (14, 16, 21, 25) zuordenbar und der Bewertungseinrichtung (2) zuführbar sind, wo diese faktorisch mit der Basisgröße (10) verrechenbar sind.

9. Vorrichtung nach einem der vorangegangenen Ansprüche, **dadurch gekennzeichnet, dass** die Bewertungseinrichtung (2) als Mikrocomputer ausgebildet ist.

10. Verfahren zur Berechnung und Anzeige von Service-Intervallen bei Verschleiß und/oder Alterungsprozessen unterworfenen Komponenten und/oder Betriebsmedien von Vorrichtungen, umfassend folgende Verfahrensschritte:
a) Erfassen der den Verschleiß und/oder die Alterung beeinflussender Parameter,
b) Unterteilen der erfassten Betriebsparameter in solche, die einen stetigen Zusammenhang mit dem Verschleiß und/oder Alterung der Komponenten und/oder Betriebsmedien aufweisen, und solchen, die einen diskreten . Zusammenhang aufweisen,
c) Ermitteln einer Basisgröße unter Heranziehung mindestens eines Betriebsparameters mit stetigem Zusammenhang,
d) Quantisierung mindestens eines Betriebsparameters in Bereiche unterschiedlicher Auswirkungen auf den Verschleiß und/oder die Alterung und Zuordnung eines Bewertungsfaktors (14, 16, 21, 25) dem aktuell erfassten und/oder abgeleiteten Betriebsparameter,
e) wahlweise Ermittlung eines mittleren Bewertungsfaktors (14, 16, 21,25) über ein vorgegebenes Zeitintervall,
f) Zusammenfassung der ermittelten Betriebsparameter in einer Bewertungseinrichtung (2), wobei die quantisierten Betriebsparameter faktorisch bei den unquantisierten Betriebsparametern berücksichtigt werden,
g) Integration der zusammengefassten Betriebsparametergrößen in zeitlich einstellbaren Intervallen,
h) wahlweise Wichtung der aufintegrierten Gesamtgröße mit einer nichtlinearen Bewertungsfunktion und
i) Vergleich der wahlweise gewichteten, integrierten Gesamtgröße mit einem vorgegebenen Schwellwert.

11. Verfahren nach Anspruch 10, **dadurch gekennzeichnet, dass** zur Ermittlung des Service-Intervalls für den Motorölwechsel bei Kraftfahrzeugen der Kraftstoffstrom (8), Motordrehzahl (7) und die Öltemperatur (11) sensorisch erfasst werden.

12. Verfahren nach Anspruch 11, **dadurch gekennzeichnet, dass** zusätzlich äußere Umgebungsbedingungen und/oder das Fahrverhalten erfasst werden oder in das Bewertungssystem eingebbar sind.

13. Verfahren nach einem der Ansprüche 11 oder 12, **dadurch gekennzeichnet, dass** aus der erfassten Öltemperatur (11) die Fahrsituation abgeleitet und daraus ein Bewertungsfaktor (16) gebildet wird.

14. Verfahren nach einem der Ansprüche 11 bis 13, **dadurch gekennzeichnet, dass** aus der Motordrehzahl (7) und dem Kraftstoffverbrauch (8) eine erste Belastungsgröße als Basisgröße (10) mittels eines Kennlinienfeldes (9) ermittelt wird, die faktorisch durch die anderen erfassten oder abgeleiteten Betriebsparameter bewertet wird.

15. Vorrichtung nach einem der Ansprüche 1 bis 9, **dadurch gekennzeichnet, dass** die Vorrichtung zur Ermittlung der Service-Intervalle für den Motoröl- oder Bremsflüssigkeitswechsel verwendbar ist.

16. Vorrichtung nach einem der Ansprüche 1 bis 9, **dadurch gekennzeichnet, dass** die Vorrichtung zur Ermittlung der Service-Intervalle für den Bremsbelag- oder Kupplungsbelagwechsel verwendbar ist.

## Claims

1. Device for calculating and displaying service intervals for components subject to wear and/or ageing processes and/or operating media of devices, in particular motor vehicles, comprising sensors for recording the operating parameters influencing the wear and/or the ageing, at least one quantization unit (12, 15, 18, 22) for the weighted quantization of at least one operating parameter with optional averaging over a predetermined time interval, the output of which is connected to the input of an evaluation means (2), to the other inputs of which the other operating parameters recorded are fed directly ;or via further quantization units (12, 15, 18, 22), an integrator (3), optionally a memory (4) containing a non-linear weighting function, and a comparator (5), wherein the output of the evaluation means (2) is connected to the input of the integrator (3) which adds up the output data of the evaluation means (2), the output of which is either connected to the memory (4) containing the non-linear weighting function or directly to the comparator (5), wherein the operating parameters recorded are divided into ones which exhibit a steady relationship to the wear and/or ageing of the components and/or operating media, and ones which exhibit a discrete relationship, wherein at least one operating parameter with a steady relationship is used to determine a base value (10) and is supplied to the evaluation means (2), wherein at least one operating parameter with a discrete relationship is subject to weighted division in a quantization unit (12, 15, 18, 22) and a weighting factor is assigned which is then likewise supplied to the evaluation means (2).

2. Device according to Claim 1, **characterized in that** the output signal of the comparator (5) can be supplied to a display means (6).

3. Device according to Claim 1 or 2, **characterized in that** at least one further evaluation means (2) is present to which operating parameters are supplied directly or via a quantization unit (12, 15, 18, 22), and connected downstream of said means are an integrator (3), optionally a memory (4) containing a non-linear weighting function, and a comparator (5).

4. Device according to Claim 3, **characterized in that** the further output signal of the further comparator (5) can be supplied to the display means (6) and/or to a further display means.

5. Device according to one of Claims 1 to 4, **characterized in that** the quantization unit (12, 15, 18, 22) is designed as fuzzy logic.

6. Device according to one of Claims 1 to 5, **characterized in that**, to determine the service interval for changing the engine oil of motor vehicle engines, the sensors record the fuel consumption (8), the engine speed (7) and the oil temperature (11).

7. Device according to Claim 6, **characterized in that** the sensors record the accelerator pedal activity (17) and/or the external climatic conditions.

8. Device according to Claim 6 or 7, **characterized in that**, by means of a characteristics field (9), a base value (10) for the engine oil wear can be derived from the fuel consumption (8) and the engine speed (7), which base value can be supplied to the evaluation means (2), wherein weighting factors (14, 16, 21, 25) can be assigned to the further operating parameters recorded or parameters derived therefrom and can be supplied to the evaluation means (2), where they can be factorially computed with the base value (10).

9. Device according to one of the preceding claims, **characterized in that** the evaluation means (2) is designed as a microcomputer.

10. Method for calculating and displaying service intervals for components subject to wear and/or ageing processes and/or operating media of devices, comprising the following method steps:
a) recording the parameters influencing the wear and/or the ageing;
b) dividing the operating parameters recorded into ones which exhibit a steady relationship to the wear and/or ageing of the components and/or operating media, and ones which exhibit a discrete relationship;
c) determining a base value using at least one operating parameter with a steady relationship;
d) quantization of at least one operating parameter into areas of different effects on the wear and/or the ageing and assignment of a weighting factor (14, 16, 21, 25) to the currently recorded and/or derived operating parameter;
e) optionally determining an average weighting factor (14, 16, 21, 25) over a predetermined time interval;
f) aggregation of the operating parameters recorded in an evaluation means (2), wherein the quantized operating parameters are factorially taken into account in the unquantized operating parameters;
g) integration of the aggregated operating parameter values in time-specifiable intervals;
h) optional weighting of the integrated total value with a non-linear weighting function; and
i) comparison of the optionally weighted, integrated total value with a predetermined threshold value.

11. Method according to Claim 10, **characterized in that**, to determine the service interval for changing the engine oil of motor vehicles, the fuel flow (8), engine speed (7) and the oil temperature (11) are recorded by means of sensors.

12. Method according to Claim 11, **characterized in that** external ambient conditions and/or the driver behaviour are additionally recorded or can be input into the evaluation system.

13. Method according to one of Claims 11 or 12, **characterized in that** the driving situation is derived from the oil temperature (11) recorded, and a weighting factor (16) is formed therefrom.

14. Method according to one of Claims 11 to 13, **characterized in that** a first load value is determined from the engine speed (7) and the fuel consumption (8) as a base value (10) by means of a characteristics field (9), which load value is factorially weighted by the other recorded or derived operating parameters.

15. Device according to one of Claims 1 to 9, **characterized in that** the device for determining the service intervals can be used for the purposes of changing the engine oil or brake fluid.

16. Device according to one of Claims 1 to 9, **characterized in that** the device for determining the service intervals can be used for the purposes of changing the brake pads or clutch linings.

## Revendications

1. Dispositif pour calculer ,et afficher des intervalles d'entretien dans le cas de composants et/ou de ressources de dispositifs soumis à l'usure et/ou à des processus de vieillissement, notamment sur les véhicules automobiles, comprenant des détecteurs pour détecter les paramètres de fonctionnement qui influencent l'usure et/ou le vieillissement, au moins une unité de quantification (12, 15, 18, 22) pour une quantification d'évaluation d'au moins un paramètre de fonctionnement avec, au choix, calcul de la moyenne sur un intervalle de temps prédéfini, dont la sortie est reliée avec une entrée d'un dispositif d'évaluation (2) aux autres entrées duquel sont acheminés d'autres paramètres de fonctionnement directement ou par le biais d'autres unités de quantification (12, 15, 18, 22), un intégrateur (3), au choix une mémoire (4) contenant une fonction d'évaluation non linéaire et un comparateur (5), la sortie du dispositif d'évaluation (2) étant relie avec une entrée de l'intégrateur (3) qui additionne les données de sortie du dispositif d'évaluation (2) et dont la sortie est reliée, au choix, avec la mémoire (4) contenant la fonction d'évaluation non linéaire ou directement avec le comparateur (5), les paramètres de fonctionnement détectés étant divisés en ceux qui présentent une relation constante avec l'usure et/ou le vieillissement des composants et/ou des ressources et en ceux qui présentent une relation discrète, au moins un paramètre de fonctionnement ayant une relation constante étant utilisé pour déterminer une grandeur de base (10) et acheminé' au dispositif d'évaluation (2), au moins un paramètre de fonctionnement ayant une relation discrète étant divisé par évaluation dans une unité de quantification (12, 15, 18, 22) et se voit affecter un facteur d'évaluation qui est ensuite lui aussi acheminé au dispositif d'évaluation (2).

2. Dispositif selon la revendication 1, **caractérisé en ce que** le signal de sortie du comparateur (5) peut être acheminé à un dispositif d'affichage (6).

3. Dispositif selon la revendication 1 ou 2, **caractérisé en ce qu'**il existe au moins un dispositif d'évaluation (2) supplémentaire auquel les paramètres de fonctionnement sont acheminés directement ou par le biais d'une unité de quantification (12, 15, 18, 22) et à la suite duquel est branché un intégrateur (3), au choix une mémoire (4) contenant une fonction d'évaluation non linéaire et un comparateur (5).

4. Dispositif selon la revendication 3, **caractérisé en ce que** le signal de sortie supplémentaire du comparateur (5) supplémentaire peut être acheminé au dispositif d'affichage (6) et/ou à un dispositif d'affichage supplémentaire.

5. Dispositif selon l'une des revendications 1 à 4, **caractérisé en ce que** l'unité de quantification (12, 15, 18, 22) est réalisée sous la forme d'une logique floue.

6. Dispositif selon l'une des revendications 1 à 5, **caractérisé en ce que** pour déterminer l'intervalle d'entretien pour une vidange de l'huile moteur dans le cas des moteurs de véhicule automobile, les détecteurs détectent la consommation de carburant (8), la vitesse de rotation du moteur (7) et la température de l'huile (11).

7. Dispositif selon la revendication 6, **caractérisé en ce que** les détecteurs détectent l'activité de la pédale d'accélération (17) et/ou les conditions climatiques externes.

8. Dispositif selon l'une les revendications 6 ou 7, **caractérisé en ce qu'**une grandeur de base (10) pour la charge du moteur peut, être déduite au moyen d'un diagramme caractéristique (9) à partir de la consommation de carburant (8) et de la vitesse de rotation du moteur (7), laquelle peut être acheminée à l'unité d'évaluation (2), des facteurs d'évaluation (14, 16, 21, 25) pouvant être associés aux autres paramètres détectés ou aux paramètres qui en sont dérivés et pouvant être acheminés à l'unité d'évaluation (2) où ils peuvent être calculés par factorisation avec la grandeur de base (10).

9. Dispositif selon l'une des revendications précédentes, **caractérisé en ce que** l'unité d'évaluation (2) est réalisée sous la forme d'un micro-ordinateur.

10. Procédé pour calculer et afficher des intervalles d'entretien dans le cas de composants et/ou de ressources de dispositifs soumis à l'usure et/ou à des processus de vieillissement, comprenant les étapes suivantes :
a) Détection des paramètres qui influencent l'usure et/ou le vieillissement ,
b) Division des paramètres de fonctionnement détectés en ceux qui présentent une relation constante avec l'usure et/ou le vieillissement des composants et/ou des ressources et en ceux qui présentent une relation discrète,
c) Détermination d'une grandeur de base en utilisant au moins un paramètre de fonctionnement ayant une relation constante,
d) Quantification d'au moins un paramètre de fonctionnement en zones d'effets différents sur l'usure et/ou le vieillissement et affectation d'un facteur d'évaluation (14, 16, 21, 25) au paramètre de fonctionnement actuellement détecté et/ou dérivé,
e) Détermination au choix d'un facteur d'évaluation (14, 16, 21, 25) moyen sur un intervalle de temps prédéfini,
f) Regroupement des paramètres de fonctionnement déterminés dans un dispositif d'évaluation (2), les paramètres de fonctionnement quantifiés étant pris en compte de manière factorielle avec les paramètres de fonctionnement non quantifiés,
g) Intégration des grandeurs de paramètres de fonctionnement regroupées dans des intervalles temporels réglables,
h) Au choix, pondération de la grandeur globale intégrée avec une fonction d'évaluation non linéaire et
j) Comparaison de la grandeur globale pondérée, intégrée au choix avec une valeur de seuil prédéfinie.

11. Procédé selon la revendication 10, **caractérisé en ce que** pour déterminer l'intervalle d'entretien pour une vidange de l'huile moteur dans le cas des moteurs de véhicule automobile, la consommation de carburant (8), la vitesse de rotation du moteur (7) et la température de l'huile (11) sont détectées par des capteurs.

12. Procédé selon la revendication 11, **caractérisé en ce qu'**en plus de cela d'autres conditions ambiantes et/ou le comportement de conduite sont détectés ou peuvent être saisis dans le système d'évaluation.

13. Procédé selon l'une des revendications 11 ou 12, **caractérisé en ce que** la situation de conduite est dérivée de la température d'huile (11) détectée et un facteur d'évaluation (16) est formé à partir de cela.

14. Procédé selon l'une des revendications 11 à 13, **caractérisé en ce qu'**une première grandeur de charge faisant office de grandeur de base (10) est déterminée à partir de la vitesse de rotation du moteur (7) et de la consommation de carburant (8) au moyen d'un diagramme caractéristique (9), laquelle est évaluée de manière factorielle par les autres paramètres de fonctionnement détectés ou dérivés.

15. Dispositif selon l'une des revendications 1 à 9, **caractérisé en ce que** le dispositif de détermination des intervalles d'entretien peut être utilisé pour la vidange de l'huile moteur ou du liquide de frein.

16. Dispositif selon l'une des revendications 1 à 9, **caractérisé en ce que** le dispositif de détermination des intervalles d'entretien peut être utilisé pour le remplacement des garnitures de frein ou de la garniture d'embrayage.
